# DEMANDE DE BREVET EUROPEEN

(11) **EP 2 447 089 A1**
(43) Date de publication de la demande: **02.05.2012**
(21) Numéro de dépôt: 11008524.8
(22) Date de dépôt: 25.10.2011
(51) Int. Cl.: B60C 11/01

(54) **Pneumatique et roue pour cycle**

(30) Priorité: 29.10.2010 FR 1004259
(71) Demandeur: MAVIC S.A.S., 74370 Metz-Tessy (FR)
(72) Inventeur: Mercat, Jean-Pierre, 74650 Chavanod (FR); Huat, François-Xavier, 74000 Annecy (FR)
(74) Mandataire: Lapierre, Stéphane

(57) **Abrégé**

Ce pneumatique (5) pour roue de cycle présente une géométrie sensiblement toroïdale et comprend un socle (6), destiné à être fixé sur une jante (3) plus large que le pneumatique (5) à l'état gonflé, une bande de roulement (7), destinée à être en contact avec le sol, et deux flancs (8) qui relient le socle (6) à la bande de roulement (7). Le pneumatique (5) est pourvu, entre chaque flanc (8) et la bande de roulement (7), d'un becquet (9) de retenue d'une circulation d'air en boucle (F).

## Description

La présente invention concerne un pneumatique pour roue de cycle ainsi qu'une roue pour cycle comportant un tel pneumatique.

La puissance mécanique que peut développer l'être humain est limitée. En particulier, la vitesse d'avance d'un cycle, par exemple un vélo, est limitée par la puissance que peut développer le cycliste. Cette vitesse d'avance est dégradée par des forces de résistance à l'avancement, qui comprennent notamment la résistance au roulement, qui est une fonction linéaire de la vitesse, et la résistance aérodynamique ou trainée, qui est fonction de la vitesse au carré. La théorie de l'aérodynamique enseigne que plus l'écoulement de l'air, autour d'un objet en déplacement, est laminaire, plus sa résistance aérodynamique sera faible. A l'inverse, lorsqu'un objet en déplacement présente une géométrie qui génère un décollement des filets d'air qui longent sa surface, son avance provoque la formation de tourbillons qui tendent à augmenter la trainée, et diminuent par conséquent la vitesse d'avance de cet objet.

US-A-5 061 013 décrit une roue de cycle qui comprend une jante et un pneumatique dont la géométrie et les proportions permettent de réduire, dans une certaine mesure, la résistance aérodynamique de la roue. Cependant, la roue présente, au niveau d'une zone de jonction périphérique entre la jante et le pneumatique, des cavités qui présentent des surfaces qui s'opposent à l'écoulement de l'air le long de la roue, ce qui augmente la résistance aérodynamique de la roue. Lorsqu'une telle roue est soumise à un écoulement d'air, des tourbillons se créent au niveau de cette zone de jonction, ce qui tend à diminuer la vitesse d'avance d'un cycle équipé d'une telle roue.

C'est à ces inconvénients qu'entend plus particulièrement remédier l'invention en proposant un pneumatique pour roue de cycle et une roue pour cycle équipée d'un tel pneumatique, dont la résistance aérodynamique est réduite.

A cet effet, l'invention concerne un pneumatique pour roue de cycle présentant une géométrie sensiblement toroïdale et comprenant un socle, destiné à être fixé sur une jante, une bande de roulement, destinée à être en contact avec le sol, et deux flancs qui relient le socle à la bande de roulement, le pneumatique étant en outre pourvu, entre chaque flanc et la bande de roulement, d'un becquet de retenue d'une circulation d'air en boucle.

Grâce à l'invention, lorsqu'une roue équipée d'un tel pneumatique est soumise à un écoulement d'air, une partie de l'écoulement d'air est piégée dans des cavités latérales situées au niveau de la jonction entre le pneumatique et la jante, de sorte que l'écoulement d'air, le long du pneumatique et de la jante, longe l'air qui est piégé dans les cavités sans se décoller de la roue, car l'air piégé dans les cavités circule en boucle dans les cavités. L'écoulement reste laminaire, sans que des tourbillons indésirables se forment au niveau de la zone de jonction entre le pneumatique et la jante. Ainsi, la résistance aérodynamique du pneumatique et de la roue est réduite. De plus, de manière avantageuse, les becquets n'augmentent que faiblement la masse du pneumatique et de la roue car leurs dimensions sont faibles.

Selon des aspects avantageux mais non obligatoires de l'invention, un tel pneumatique pour roue de cycle peut incorporer une ou plusieurs des caractéristiques suivantes, prises dans toute combinaison techniquement admissible :
- chaque becquet comprend une surface latérale, adjacente à la bande de roulement, qui est tangente à une surface extérieure de la bande de roulement, et une surface de blocage de la circulation d'air en boucle, qui, à l'état gonflé du pneumatique, fait face au socle.
- les surfaces de blocage sont situé au dessus ou à proximité d'une ligne d'équateur du pneumatique.
- de chaque coté du pneumatique son épaisseur présente deux maxima situés respectivement au sommet et au niveau de la surface de blocage ainsi qu'un minimum situé entre lesdits deux maxima.
- dans une section radiale du pneumatique mis à plat, la distance séparant les deux minima est comprise entre 70 % et 90% de la distance séparant les surfaces de blocage.
- la section radiale du pneumatique présente un contour fermé et, dans une section radiale du pneumatique à l'état dégonflé et mis à plat, une distance, entre les surfaces de blocage, est comprise entre 64 et 100 % d'une largeur du pneumatique.
- la section radiale du pneumatique présente un contour ouvert et, dans une section radiale du pneumatique mis à plat, une distance, entre les surfaces de blocage, est inférieure ou égale à 80 % d'une distance entre les talons du socle du pneumatique, de préférence inférieure ou égale à 75%.
- chaque flanc et la surface de blocage du becquet associé délimitent au moins en partie une cavité apte à piéger la recirculation de l'air en boucle.
- dans une section radiale du pneumatique, une épaisseur maximale de chaque becquet, mesurée radialement, est supérieure ou égale à 0,5 mm.
- dans une section radiale du pneumatique à l'état dégonflé et mis à plat, pour chaque becquet, un angle, situé à l'extérieur du pneumatique et défini entre, d'une part, une surface latérale de ce becquet, adjacente à la bande de roulement, et, d'autre part, une portion de la bande de roulement adjacente à la surface latérale de ce becquet, est compris entre 160 et 175°, de préférence supérieur à 167°.
- chaque becquet est constitué par l'une des extrémités latérales d'un élément supplémentaire rapporté sur le pneumatique, qui forme la bande de roulement.

L'invention a également pour objet une roue pour cycle comprenant une jante et un tel pneumatique.

L'invention sera mieux comprise et d'autres avantages de celle-ci apparaîtront plus clairement à la lumière de la description qui va suivre d'une roue pour cycle et d'un pneumatique conformes à l'invention, donnée uniquement à titre d'exemple et faite en référence aux dessins dans lesquels :
- la figure 1 est une vue partielle en perspective d'une roue pour cycle conforme à l'invention ;
- la figure 2 est une coupe selon le plan II à la figure 1 ;
- la figure 3 est une coupe, analogue à la figure 2, d'un pneumatique appartenant à la roue de la figure 1 à l'état dégonflé et mis à plat ;
- la figure 4 est une coupe analogue à la figure 2 d'une roue pour cycle conforme à un deuxième mode de réalisation de l'invention ;
- la figure 5 est une coupe analogue à la figure 2 d'un pneumatique mis à plat appartenant à la roue de la figure 4 ; et
- les figures 6 et 7 sont des coupes, analogues à la figure 5, de pneumatiques conformes à des variantes du deuxième mode de réalisation de l'invention.
- la figure 8 est une coupe d'une autre variante du deuxième mode de réalisation de l'invention.

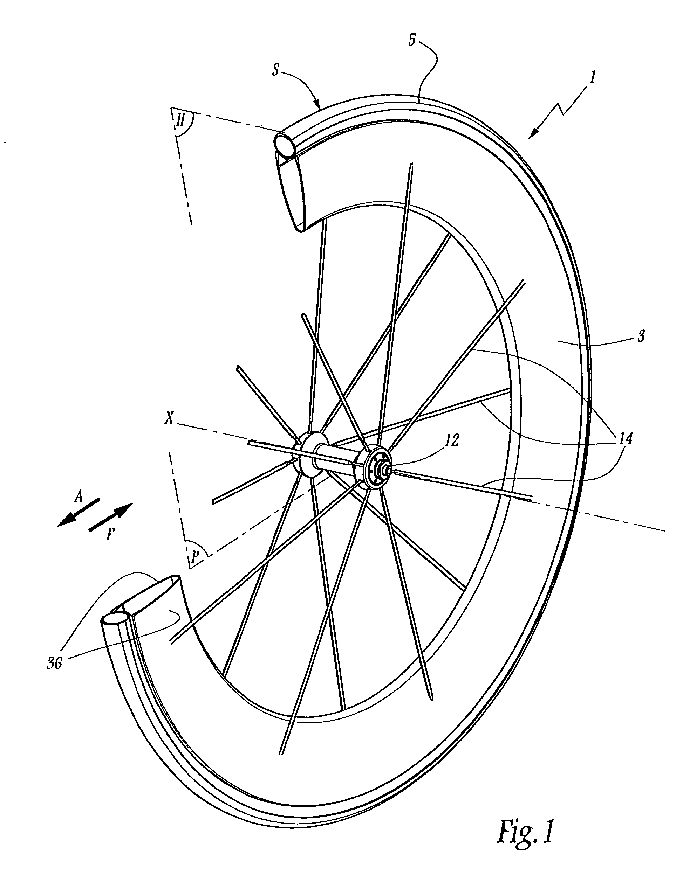

La figure 1 montre une roue 1 destinée à équiper un cycle non représenté, par exemple un vélo ou un autre type de cycle. Lors de son utilisation, la roue 1 est mobile en rotation autour d'un axe X. La roue 1 est une roue à rayons, mais l'invention peut s'appliquer à d'autres types de roues. Une portion de la roue 1 n'est pas représentée, de manière à laisser apparaitre la géométrie intérieure de la roue 1. La roue 1 comprend une jante 3, un pneumatique 5, un moyeu 12 et des rayons 14 qui relient la jante 3 au moyeu 12. L'axe X est un axe de révolution pour la jante 3 et le pneumatique 5.

Dans la suite de la description, on qualifie d'extérieures les surfaces qui font face à l'extérieur de la roue 1, et on qualifie d'intérieures les surfaces qui sont situées à l'intérieur de la roue 1.

On appelle sommet S du pneumatique 5, une zone circulaire périphérique extérieure du pneumatique 5 qui est en contact avec le sol lors de l'utilisation de la roue 1. On note P un plan de symétrie de la roue 1, perpendiculaire à l'axe X et passant par le sommet S du pneumatique 5.

On note A une direction d'avance de la roue 1, perpendiculaire à l'axe X et contenue dans le plan P. Lorsque la roue 1 avance selon la direction A, la roue 1 est soumise à un écoulement d'air F, de même direction que la direction A mais de sens opposé. A noter que l'écoulement peut avoir une direction F inclinée d'un angle d'incidence par rapport à la direction d'avancement A, cet angle d'incidence est due à un vent météo latéral par rapport à la route.

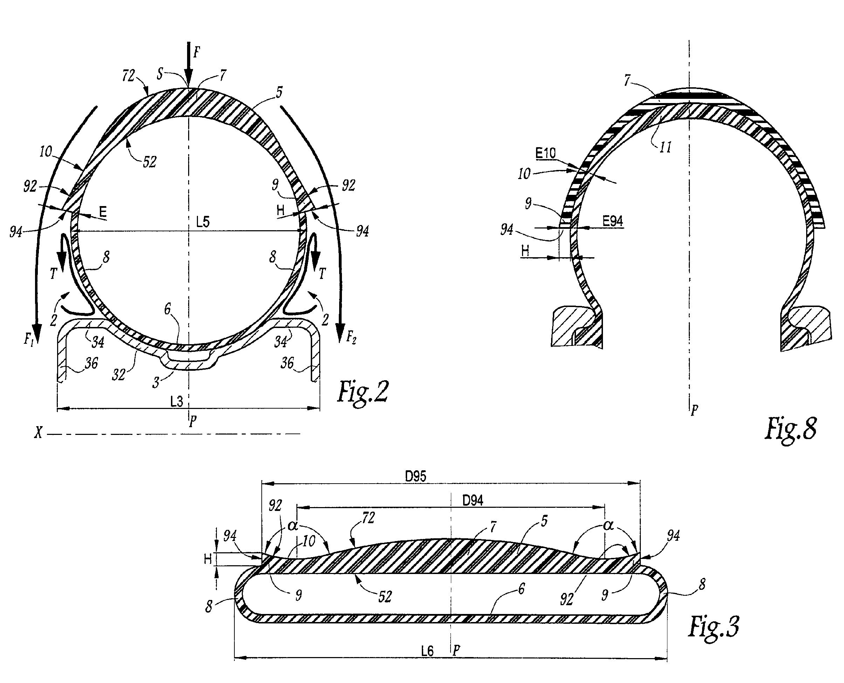

La figure 2 est une section radiale de la roue 1, c'est-à-dire une coupe selon un plan II qui passe par l'axe X. Aux figures 1 et 2, la roue 1 est représentée dans une configuration dans laquelle le pneumatique 5 est assemblé à la jante 3 et est gonflé.

Comme le montre la figure 2, la roue 1 est de type boyau, c'est-à-dire que sa section radiale présente un contour fermé sur lui-même. Lorsque le pneumatique 5 est gonflé, la section radiale du pneumatique 5 est à peu près circulaire, compte tenu de son épaisseur variable. Le pneumatique 5 présente ainsi une géométrie sensiblement toroïdale. Le pneumatique 5 comprend un socle 6, une bande de roulement 7 et deux flancs latéraux 8 qui relient le socle 6 à la bande de roulement 7. Le socle 6 est collé sur la jante 3. La bande de roulement 7 est située au niveau du sommet S du pneumatique 5, et présente une surface extérieure 72. La bande de roulement 7 est plus épaisse que le socle 6 et les flancs 8, et son épaisseur augmente en se rapprochant du sommet S. Chaque flanc 8 est séparé de la bande de roulement 7 par un becquet 9 qui fait saillie vers l'extérieur du pneumatique 5 et dont l'épaisseur augmente en s'éloignant de la bande de roulement 7.

Chacun des deux becquets 9 s'étend sur toute la périphérie du pneumatique 5 et présente une surface latérale 92, tangente à la surface extérieure 72 de la bande de roulement 7, et une surface de blocage 94, qui fait face au socle 6. La surface de blocage 94 est de préférence sensiblement perpendiculaire aux flancs 8. Les becquets 9 sont situés au dessus d'une ligne d'équateur du pneumatique 5. Dans l'esprit du brevet et selon une section radiale, on considère que la ligne d'équateur du pneumatique correspond à la ligne où le pneumatique à la plus grande largeur. Sur la figure 2, cette ligne est représentée par la flèche marquant le diamètre maximal L5.

On note H une hauteur maximale de chaque becquet 9, mesurée radialement au niveau des surfaces de blocage 94. Dans l'exemple décrit ici, la hauteur H est environ égale à 1 mm. De préférence, la hauteur H est supérieure ou égale à 0,5 mm.

L'épaisseur E du pneumatique varie entre le sommet S où elle est maximale et les différentes régions du pneumatique. Au niveau de la surface de blocage 94, l'épaisseur E94 passe par un maximum relatif qui correspond à l'addition de la hauteur H et de l'épaisseur de la portion sous-jacente du pneumatique. Entre sommet S et la surface de blocage 94, l'épaisseur E passe par un minimum au point 10. Dans le mode de réalisation décrit aux figures 1 à 3, l'épaisseur au sommet vaut environ 3,5 mm, l'épaisseur E94 vaut environ 1,6 mm et à l'endroit du minimum 10, l'épaisseur E10 est environ égale à 1,2 mm. La présence du minimum d'épaisseur 10 est un des moyens permettant de donner aux becquets une forme de déflecteur des écoulements d'air E1 et E2.

La distance D95 séparant les 2 minimums 10 représente entre 70 et 90 % de la largeur entre les surfaces de blocage D94 et de préférence entre 74 et 78 %. On obtient de bons résultats avec une distance D95 égale à 76 % de la distance D94.

La jante 3, de largeur L3, comprend deux parois latérales 36, représentées partiellement à la figure 2, qui sont reliées par une portion périphérique 34 qui comprend une portion centrale 32 concave. Le socle 6 est collé sur la portion centrale 32 de la portion périphérique 34 de la jante 3.

On note L5 une largeur du pneumatique 5, mesurée parallèlement à l'axe X, au niveau de la ligne d'équateur. La largeur L5 du pneumatique 5 est inférieure à la largeur L3 de la jante 3. La mise en oeuvre de l'invention donne particulièrement de bon résultats dans le cas des roues dont la jante est plus large que le pneumatique (L3 > L5). Cependant, la mise en oeuvre d'un pneumatique selon l'invention pourra améliorer l'aérodynamisme d'une roue dont la jante est de même largeur, ou de largeur inférieure au pneumatique.

La roue 1 présente, au niveau de la jonction entre le pneumatique 5 et la jante 3, deux cavités latérales 2 délimitées chacune par la portion périphérique 34 de la jante 3, un des flancs 8 du pneumatique 5 et par la surface de blocage 94 d'un des becquets 9. Etant donné que la jante est plus large que la largeur la plus grande du pneumatique à l'état gonflé L5 et que le becquet soit situé à proximité ou au-dessus du plan équatorial du pneumatique, le volume des cavités latérales 2 est relativement important. Notamment la profondeur des cavités est sensiblement égale à la profondeur du crochet dans le cas d'un pneu à tringle et à la profondeur de la portion périphérique 34 dans le cas d'un boyau.

La figure 3 montre une section radiale du pneumatique 5 dégonflé et mis à plat. Dans cette configuration, une surface intérieure 52 du pneumatique 5 comprend deux portions planes parallèles, qui appartiennent respectivement au socle 6 et à la bande de roulement 7, et qui sont raccordées entre elles par les flancs 8, qui sont recourbés. Cette représentation est schématique, car en pratique, lorsque le pneumatique 5 est mis à plat, la bande de roulement 7 vient au contact du socle 6.

On note D94 une distance, mesurée parallèlement à l'axe X, entre les surfaces de blocage 94 des becquets 9. Dans la configuration de la figure 3, la surface de blocage 94 de chaque becquet 9 est parallèle au plan P. On note L6, une largeur du pneumatique 5, mesurée parallèlement à l'axe X. De préférence, la distance D94 est comprise entre 64 et 100 % de la largeur L6. On obtient de bons résultats avec une valeur D94 comprise entre 69 et 74 %.

Pour chaque becquet 9, on note α un angle, situé à l'extérieur du pneumatique 5 et mesuré entre la surface latérale 92 de ce becquet 9 et une extrémité de la bande de roulement 7 adjacente à ce becquet 9. La zone de jonction entre la surface latérale 92 de chaque becquet 9 et la bande de roulement 7 étant arrondie, la mesure de l'angle α est prise de part et d'autre de cet arrondi. L'angle α est environ égal à 150°. Plus l'angle α diminue, plus les becquets 9 sont inclinés vers l'extérieur et font saillie par rapport à la bande de roulement 7. De préférence, l'angle α est compris entre 160 et 175°, de préférence encore supérieur à 167°.

En service, lorsque l'écoulement d'air F atteint le sommet S du pneumatique 5, il se sépare en deux écoulements d'air latéraux F1 et F2 qui, comme représenté sur la figure 2, longent le pneumatique 5 et les parois latérales 36 de la jante 3, de part et d'autre de la roue 1. Lorsque les écoulements latéraux F1 et F2 longent la roue 1, une partie de ces écoulements F1 et F2 s'engouffre dans chaque cavité 2 et recircule dans ces cavités 2, comme indiqué par les flèches F à la figure 2. En d'autres termes, de l'air est piégé dans les cavités 2 et circule en boucle dans ces cavités 2. Plus précisément, l'air qui est bloqué dans chaque cavité 2 longe la portion périphérique 34 de la jante 3, puis longe le flanc 8 correspondant, en direction du becquet 9 correspondant. Puis, les surfaces de blocage 94 des becquets 9 font obstacle à l'air bloqué dans les cavités 2, de sorte que l'air est redirigé en direction de la portion périphérique 34. Les becquets 9 sont donc des becquets de retenue d'une circulation de l'air en boucle, dans les cavités 2.

Grâce aux becquets 9, les écoulements latéraux F1 et F2 restent laminaires lorsqu'ils franchissent l'interface entre le pneumatique 5 et la jante 3, car de l'air piégé comble les cavités 2. Ainsi, les écoulements latéraux F1 et F2 peuvent se recoller sur les flancs de la jante et ne se décollent pas de la roue 1, et ne créent pas de tourbillons indésirables générant une perte d'énergie.

Les becquets 9 sont avantageusement situés au niveau d'une zone de décrochage des écoulements latéraux F1 et F2, c'est-à-dire à proximité de l'endroit où les écoulements F1 et F2 se décolleraient du pneumatique 9 s'il n'était pas pourvu de becquets 9. Les becquets 9 peuvent également être situés légèrement en aval de la zone de décrochage.

Les surfaces latérales 92 des becquets 9 étant tangentes à la surface extérieure 72 de la bande de roulement 7, les écoulements latéraux F1 et F2 ne se décollent pas et restent laminaires lorsqu'ils longent la bande de roulement 7 et les becquets 9. Si l'angle α est trop faible, une cassure apparait entre la surface extérieure 72 de la bande de roulement 7 et la surface latérale 92 de chaque becquet 9, ce qui peut provoquer une déviation trop importante et rapide du flux d'air augmentant ainsi la trainée par une augmentation de pression sur les surfaces latérales 92.

Dans le cas où le pneumatique 9 ne serait pas pourvu des becquets 9, les écoulements latéraux F1 et F2 entreraient dans les cavités 2, ce qui provoquerait le décollement des écoulements latéraux F1 et F2 et la formation de tourbillons F qui cherchent alors à remonter le plus haut possible le long des flans du pneu n'étant pas arrêtés par les délimitations du becquet 9, en remontant ainsi ils diminuent la zone laminaire et augmentent ainsi la trainée de la roue.

Les becquets 9 ne comblent pas les cavités 2. Au contraire, les surfaces de blocage 94 des becquets 9 délimitent la partie supérieure des cavités 2 pour permettre la recirculation de l'air dans les cavités 2.

De manière facultative, le pneumatique est constitué par une carcasse sur laquelle est collé un élément supplémentaire qui constitue la bande de roulement 7. Dans ce cas, les becquets 9 sont constitués par les extrémités latérales de cette pièce rapportée.

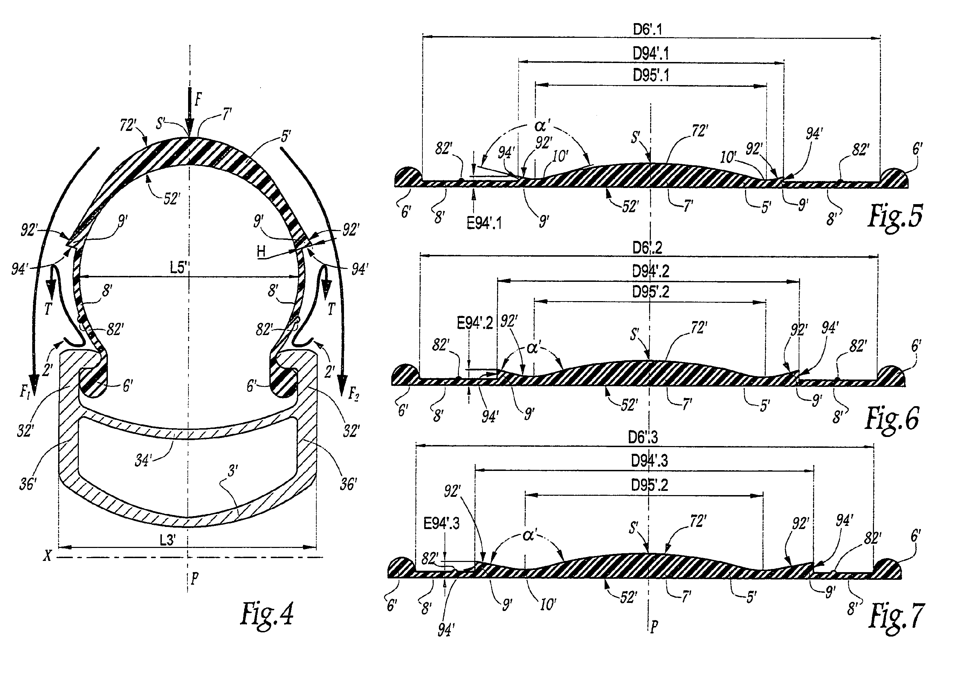

Les figures 4 et 5 correspondent à un deuxième mode de réalisation de l'invention dans lequel les éléments analogues à ceux des figures 1 à 3 portent les mêmes références suivies d'un signe prime.

La figure 5 montre une section radiale d'une roue dans une configuration dans laquelle un pneumatique 5' est assemblé à une jante 3' avec une chambre à air gonflée non représentée. Le pneumatique 5' est de type pneu à tringle, c'est-à-dire sa section radiale présente un contour ouvert en direction de l'axe X. De ce fait, le pneumatique 5' est sensiblement toroïdal. Les bords du pneumatique 5' tournés vers l'axe X sont pourvus chacun d'un talon 6' qui renferme une tringle de rigidification non représentée. Les talons 6' constituent un socle du pneumatique 5'. Le pneumatique 5' comprend une bande de roulement 7' et deux flancs 8' qui relient la bande de roulement 8' aux talons 6'. La bande de roulement 7' est située au niveau du sommet S' du pneumatique 5', et présente une surface extérieure 72'. La bande de roulement 7' est plus épaisse que les flancs 8', et son épaisseur augmente en se rapprochant du sommet S. Chaque flanc 8' est séparé la bande de roulement 7' par un becquet 9' qui fait saillie vers l'extérieur du pneumatique 5' et dont l'épaisseur augmente en s'éloignant de la bande de roulement 7'. Chaque becquet 9' présente une surface latérale 92', tangente à la surface extérieure 72' de la bande de roulement 7', et une surface de blocage 94', qui fait face aux talons 6'. La surface de blocage 94' est perpendiculaire aux flancs 8'. Le caractère perpendiculaire ou sensiblement perpendiculaire de la surface de blocage par rapport aux flancs doit permettre d'assurer une transition bien marquée entre le becquet et les flancs à la différence de la transition entre le becquet et la surface de roulement. C'est pourquoi on pourra réaliser des becquets dont les surfaces de blocage font avec le flanc 8 un angle compris entre 60° et 120°, de préférence compris entre 75° et 105°.

La jante 3', de largeur L'3, comprend un caisson creux 34' qui comprend deux parois latérales 36'. Les extrémités des parois latérales 36', situées du côté du pneumatique 5', sont pourvues de crochets 32' en forme de L. Les talons 6' du pneumatique 5' sont fixés à la jante 3' au moyen des crochets 32'.

La jante 3' peut être fixée à un élément, non représenté, dont la géométrie se rapproche de celle de la jante 3' visible à la figure 1.

Les flancs 8' sont équipés chacun d'un témoin de centrage 82' facultatif, situé entre les talons 6' et les becquets 9'. Les témoins de centrage 82' permettent de placer correctement les talons 6' du pneumatique 5' dégonflé entre les crochets 34' de la jante 3', lors du montage de la roue 1'.

On note L5' une largeur du pneumatique 5', mesurée parallèlement à l'axe X, au niveau d'une ligne d'équateur de la section radiale du pneumatique 5'. La largeur L5' du pneumatique 5' est inférieure à la largeur L3' de la jante 3'. On notera que dans le cas d'un pneumatique à tringle, la position de la ligne d'équateur peut changer pour un même pneu suivant l'écartement des crochets de la jante sur laquelle il est monté. Ainsi les becquets pourront être placés au dessus de la ligne d'équateur ou à proximité de celle-ci, mais légèrement en dessous.

La roue 1' présente, au niveau de la jonction entre le pneumatique 5' et la jante 3', deux cavités latérales 2' délimitées chacune par un des crochets 32' de la jante 3', un des flancs 8' du pneumatique 5' et par la surface de blocage 94' d'un des becquets 9'.

La figure 5 montre une section radiale du pneumatique 5' séparé de la jante 3' et mis à plat. Dans cette configuration, la surface intérieure 52' du pneumatique 5' est plane et est perpendiculaire au plan P.

On note D94'.1 une distance, mesurée perpendiculairement au plan P, entre les surfaces de blocage 94' des becquets 9'. Dans la configuration de la figure 5, la surface de blocage 94' de chaque becquet 9' est parallèle au plan P. On note D6'.1, une distance entre les talons 6' du pneumatique 5', mesurée perpendiculairement au plan P. La distance D94'.1 est environ égale à 60% de la distance D6'.1.

Pour chaque becquet 9', on note α' un angle, situé à l'extérieur du pneumatique 5', mesuré entre la surface latérale 92' de chaque becquet 9' et une extrémité de la bande de roulement 52' adjacente à ce becquet 9'. Sur les figures 5 à 7, seul l'angle α' situé à gauche du plan P est représenté. Les angles α' du pneumatique 5' sont égaux et valent environ 150°. De préférence, l'angle α' est supérieur l'angle α est compris entre 160 et 175°, de préférence encore supérieur à 167°.

On note H la hauteur maximale de chaque becquet 9', mesurée radialement au niveau de sa surface de blocage 94'. La hauteur maximale H est environ égale à 0,5 mm. De préférence, la hauteur maximale H est supérieure ou égale à 0,5 mm. Sur les figures 2, 3, 4 et 8, seule la hauteur maximale H d'un des becquets 9, 9' est représentée, mais la hauteur maximale de l'autre becquet 9, 9' est identique.

Comme on peut le voir à la figure 5, l'épaisseur E du pneumatique possède deux maxima, un au niveau du sommet S' et l'autre au niveau de la surface de blocage 94' entre lesquels il y a un minimum d'épaisseur 10'. La distance D95'.1 séparant les deux minima 10' correspond à environ 90 % de la distance D94'.1 séparant les deux surfaces de blocage 94'. Rapportée à la distance D6'.1 le rapport est dans la fourchette de 40 à 60 %. Dans l'exemple représenté, ce rapport est d'environ 50 %.

Lorsque la roue conforme au deuxième mode de réalisation est soumise à un écoulement d'air F analogue à celui décrit en référence au premier mode de réalisation, on observe les mêmes phénomènes que ceux décrits pour le premier mode de réalisation. Ainsi, une partie des écoulements latéraux F1 et F2 constitue un tourbillon T qui est piégé dans les cavités 2', et recircule dans les cavités 2' grâce aux becquets 9', comme indiqué par les flèches F à la figure 4.

Les figures 6 et 7 illustrent des variantes du mode de réalisation des figures 4 et 5. Ainsi, sur les figures 6 et 7, les éléments analogues à ceux des figures 4 et 5 portent les mêmes références.

Les pneumatiques 5' des figures 6 et 7 se distinguent de celui des figures 4 et 5 par l'étendue de la distance, mesurée perpendiculairement au plan P, entre les surfaces de blocage 94' : on passe de la distance D94'.1, montrée à la figure 5, à la distance D94'.2 montrée à la figure 6, qui est plus grande que la distance D94'.1, voire à la distance D94'.3 montrée à la figure 7 qui est encore plus grande. Ainsi, la distance D94'.2 est environ égale à 66% de la distance D6'.2 et la distance D94'.3 est environ égale à 75% de la distance D6'.3. Dans tous les cas, on notera que, de préférence, cette distance entre les surfaces de blocage 94' est de préférence inférieure ou égale à 80% de la distance D6'.1. D'autre part, la distance D95'.2 et D95'.3 séparant des mimima d'épaisseur 10' sont respectivement environ égales à 80 et 70 % des distances D94'.2 et D94'.3.

Les pneumatiques 5' des figures 6 et 7 se distinguent également de celui des figures 4 et 5 par la hauteur H des becquets 9'. Cette hauteur H pouvant être supérieure à l'épaisseur E8' des flancs. Dans la pratique, pour un pneu de bicyclette, notamment pour un pneu prévu pour une utilisation sportive sur route, l'épaisseur E8' pourra être comprise entre 0,8 mm et 2 mm. La hauteur H du becquet pourra être comprise entre 0,5 et 3 mm.

La figure 8 illustre une autre variante du deuxième mode de réalisation de l'invention. Dans cette vue la construction interne du pneumatique a été représentée plus en détail. On y voit notamment que ce dernier comporte une carcasse 11, sur laquelle est disposée une bande de roulement 7. Dans la pratique, la solidarisation de la carcasse 11 et de la surface de roulement 7 peut être réalisée par collage, ou directement au cours de la vulcanisation commune de la carcasse et de la bande de roulement.

Cette variante de réalisation se caractérise par une très faible différence d'épaisseur entre l'épaisseur E94 et l'épaisseur E10, cette différence pouvant être inférieur à 0,1 mm.

Un pneumatique et une roue conformes à l'invention présentent une résistance aérodynamique améliorée, sans augmenter de manière trop importante la masse du pneumatique et de la roue. En effet, les becquets 9 et 9' sont de dimensions relativement faibles, ce qui n'ajoute que peu de matière au pneumatique. De plus, le positionnement des becquets au dessus de la ligne d'équateur du pneu, ou à la proximité de celle-ci, a pour conséquence que ces derniers ne gênent pas le montage du pneu sur la jante. En effet, dans tous les modes de réalisation, les becquets sont relativement éloignés des crochets ou de la portion périphérique de la jante.

## Revendications

1. Pneumatique (5 ; 5') pour roue (1 ; 1') de cycle, présentant une géométrie sensiblement toroïdale et comprenant un socle (6 ; 6'), destiné à être fixé sur une jante (3 ; 3'), une bande de roulement (7 ; 7'), destinée à être en contact avec le sol, et deux flancs (8 ; 8') qui relient le socle (6 ; 6') à la bande de roulement (7 ; 7'), le pneumatique (5 ; 5') étant **caractérisé en ce qu'**il est pourvu, entre chaque flanc (8 ; 8') et la bande de roulement (7 ; 7'), d'un becquet (9 ; 9') de retenue d'une circulation d'air en boucle (T).

2. Pneumatique (5 ; 5') selon la revendication 1, **caractérisé en ce que** chaque becquet (9 ; 9') comprend une surface latérale (92 ; 92'), adjacente à la bande de roulement (7 ; 7'), qui est tangente à une surface extérieure (72 ; 72') de la bande de roulement (7 ; 7'), et une surface (94 ; 94') de blocage de la circulation d'air en boucle (T), qui, à l'état gonflé du pneumatique (5 ; 5'), fait face au socle (6 ; 6').

3. Pneumatique (5 ; 5') selon la revendication 2, **caractérisé en ce que** les surfaces de blocage (94 ; 94') sont situé au dessus ou à proximité d'une ligne d'équateur du pneumatique.

4. Pneumatique (5 ; 5') selon l'une des revendications 2 à 3, **caractérisé en ce que** de chaque coté du pneumatique son épaisseur comprend deux maxima situés respectivement au sommet (S) et au niveau de la surface de blocage (94) ainsi qu'un minimum (10) situé entre lesdits deux maxima.

5. Pneumatique (5) selon la revendication 4, **caractérisé en ce que** dans une section radiale du pneumatique (5') mis à plat, la distance (D95, D95') séparant les deux minima (10) est comprise entre 70 % et 90 % de la distance (D94 ; D94'.1 ; D94'.2 ; D94'.3), séparant les surfaces de blocage (94, 94').

6. Pneumatique (5) selon l'une des revendications 4 ou 5, **caractérisé en ce que** la section radiale du pneumatique (5) présente un contour fermé et **en ce que**, dans une section radiale du pneumatique (5) à l'état dégonflé et mis à plat, une distance (D94), entre les surfaces de blocage (94), est comprise entre 64 % et 100 % d'une largeur (L6) du pneumatique (5).

7. Pneumatique (5') selon l'une des revendications 4 ou 5, **caractérisé en ce que** la section radiale du pneumatique (5') présente un contour ouvert et **en ce que**, dans une section radiale du pneumatique (5') mis à plat, une distance (D94'.1 ; D94'.2 ; D94'.3), entre les surfaces de blocage (94'), est inférieure ou égale à 80 % d'une distance (D6'.1, D6'.2, D6'.3) entre des talons (6') du socle du pneumatique (5'), de préférence inférieure à 75%.

8. Pneumatique (5 ; 5') selon l'une des revendications 2 à 7, **caractérisé en ce que** chaque flanc (8 ; 8') et la surface de blocage (94 ; 94') du becquet associé (9 ; 9') délimitent au moins en partie une cavité (2 ; 2') apte à piéger la recirculation de l'air en boucle (F).

9. Pneumatique (5 ; 5') selon l'une des revendications précédentes, **caractérisé en ce que**, dans une section radiale du pneumatique (5 ; 5'), une hauteur maximale H de chaque becquet (9 ; 9'), mesurée radialement, est supérieure ou égale à 0,5 mm.

10. Pneumatique (5 ; 5') selon l'une des revendications précédentes, **caractérisé en ce que**, dans une section radiale du pneumatique (5 ; 5') à l'état dégonflé et mis à plat, pour chaque becquet (9 ; 9'), un angle (α ; α'), situé à l'extérieur du pneumatique (5 ; 5') et défini entre, d'une part, une surface latérale (92 ; 92') de ce becquet (9 ; 9'), adjacente à la bande de roulement (7 ; 7'), et, d'autre part, une portion de la bande de roulement (7 ; 7') adjacente à la surface latérale (92 ; 92') de ce becquet (9 ; 9'), est compris entre 160 et 175°, de préférence supérieur à 167°.

11. Pneumatique (5 ; 5') selon l'une des revendications précédentes, **caractérisé en ce que** chaque becquet (9 ; 9') est constitué par l'une des extrémités latérales d'un élément supplémentaire rapporté sur le pneumatique (5 ; 5'), qui forme la bande de roulement (7 ; 7').

12. Pneumatique (5 ; 5') selon l'une des revendications précédentes, **caractérisé en ce que** chaque becquet (9 ; 9') s'étend sur toute la périphérie du pneumatique (5 ; 5').

13. Roue (1; 1') pour cycle comprenant une jante (3; 3'), **caractérisée en ce qu'**elle comprend un pneumatique (5; 5') selon l'une des revendications précédentes, dont le socle (6 ; 6') est fixé à la jante (3 ; 3').
